(19) Europäisches Patentamt / European Patent Office / Office européen des brevets

(11) **EP 3 845 689 A1**

(12) **EUROPEAN PATENT APPLICATION**
published in accordance with Art. 153(4) EPC

(43) Date of publication:
07.07.2021 Bulletin 2021/27

(21) Application number: 20738634.3

(22) Date of filing: 08.01.2020

(51) Int Cl.:
*D01F 8/14* (2006.01)          *A47J 31/06* (2006.01)
*B01D 39/08* (2006.01)          *B65D 77/00* (2006.01)
*D03D 1/00* (2006.01)

(86) International application number:
**PCT/JP2020/000359**

(87) International publication number:
**WO 2020/145323 (16.07.2020 Gazette 2020/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(30) Priority: 09.01.2019   JP 2019001623

(71) Applicant: KB Seiren, Ltd.
**Sabae-shi**
**Fukui 916-0038 (JP)**

(72) Inventor: **SAITO, Tomonori**
**Sabae-shi, Fukui 916-0038 (JP)**

(74) Representative: **Isarpatent**
**Patent- und Rechtsanwälte Behnisch Barth**
**Charles**
**Hassa Peckmann & Partner mbB**
**Friedrichstrasse 31**
**80801 München (DE)**

(54) **MULTIFILAMENT FOR FILTER FABRIC FOR EXTRACTING PREFERRED BEVERAGE**

(57)    To provide a filament for obtaining a palatable beverage extracting filter having excellent formability, which is less expensive, and having excellent extractability.

A core-sheath type composite multifilament for a palatable beverage extracting filter, including a core component and a sheath component, the core component being a homopolyester having a melting point of 220°C or more, the sheath component being a copolyester containing terephthalic acid and a diol as major components and having a melting point at least 40°C lower than that of the core component, and a number of filaments is 2 to 5.

EP 3 845 689 A1

**Description**

TECHNICAL FIELD

The present invention relates to a multifilament for a palatable beverage extracting woven fabric filter.

BACKGROUND ART

Conventionally, as a material for a palatable beverage extracting filter, a paper or a non-woven fabric made of polypropylene or polyethylene has been used as a major material. However, these materials have problems that the filters have poor transparency and tea leaves in the package material cannot be seen well. Further, paper has a problem that it cannot be treated by heat sealing. Therefore, in recent trends, a palatable beverage extracting bag made of a woven fabric having high-quality feeling in which tea leaves in the palatable beverage extracting bag can be seen is increasing.

As a material fiber of the palatable beverage extracting filter used for the palatable beverage extracting bag made of a woven fabric, the major material is a polyamide fiber. The extracting filter made of the woven fabric including a polyamide fiber has improved three dimensional shape-retaining properties and excellent elastic recovery against the deformation, and therefore the woven fabric is soft and has improved feeling.. However, it has been previously indicated that the extracting bag made of a polyamide fiber has problems of the yellowing because of the effect of oxygen in air, the dimension change of the extracting bag because of the swelling of the polyamide fiber in hot water, the poor liquid draining when the bag after extracting is removed from the container, the poor settleability of the extracting bag in hot water because of low specific weight of polyamide, and environmental contamination because of forming nitrogen oxides when burned.

In order to solve the problems of the polyamide fiber, a palatable beverage extracting filter using a polyester fiber has been researched. For example, in Patent Document 1, a method for producing a palatable beverage extracting filter being composed of a woven fabric using a polyester fiber having a core-sheath structure in which there is a difference of the melting point between the core and the sheath is proposed. Also, in Patent Document 2, a multifilament for yarn separation which can be used as a polyester monofilament for a palatable beverage extracting filter being composed of a copolyester containing isophthalic acid as the copolymerization component, and a palatable beverage extracting filter obtained therefrom are proposed. In Patent Document 3, a palatable beverage extracting filter using flat mono filament is proposed.

PRIOR ART DOCUMENTS

PATENT DOCUMENTS

Patent Document 1: JP patent No. 3,459,951
Patent Document 2: JP-A-2008-45244
Patent Document 3: WO2008 / 035443

SUMMARY OF THE INVENTION

PROBLEMS TO BE SOLVED BY THE INVENTION

The woven fabric for the palatable beverage extracting filter of Patent Document 1, 2, 3, has excellent formability because it is manufactured by weaving a mono filament, heat setting, and preventing a slippage. However, the manufacturing cost of the mono filament is high, because, the mono filament is generally manufactured by two-step method in which the filament is stretched after spinning, or manufactured by producing the multifilament for yarn separation and separating. Lately, a filter which is less expensive and has an excellent extractability is demanded.

The present invention is made considering the background, and the object of the present invention is to provide filament for woven fabric for obtaining palatable beverage extracting filter having excellent formability, which is less expensive, and having excellent extractability.

MEANS FOR SOLVING THE PROBLEMS

The present invention solves these problems, and includes the following configurations.

(1) A core-sheath type conjugate multifilament for a palatable beverage extracting woven fabric filter, wherein a core component is a homopolyester having a melting point of 220°C or more, a sheath component is a copolyester containing terephthalic acid and a diol as major components and having a melting point at least 40°C lower than that of the core component, and a number of filaments is 2 to 5.

(2) A core-sheath type conjugate multifilament for a palatable beverage extracting woven fabric filter, wherein a core component is a homopolyethylene terephthalate, a sheath component is an isophthalic acid copolymerized polyethylene terephthalate, and a number of filaments is 2 to 5.

(3) A core-sheath type conjugate multifilament for a palatable beverage extracting woven fabric filter, wherein a core component is a homopolyethylene terephthalate, a sheath component is a copolyethylene terephthalate in which more than 20 mol% of an isophthalic acid is copolymerized, and a number of filaments is 2 to 5.

(4) The multifilament for a palatable beverage extracting woven fabric filter according to any one of (1) to (3), wherein a mass change after immersing in an aqueous ethanol solution in a concentration of 10 mass% for 1 hour is 4% or less.

(5) The multifilament for a palatable beverage extracting woven fabric filter according to any one of (1) to (4), wherein an eluted amount of heavy metals is less than 0.1 ppm.

(6) The multifilament for a palatable beverage extracting woven fabric filter according to any one of (1) to (5), wherein a polycondensation catalyst for the copolyester in the sheath component is a titanium catalyst.

(7) The multifilament for a palatable beverage extracting woven fabric filter according to any one of (1) to (6), wherein a polycondensation catalyst for the homopolyester in the core component is a titanium catalyst.

(8) A woven fabric for a palatable beverage extracting filter, wherein the woven fabric comprises the multifilament according to any one of (1) to (7).

(9) A woven fabric for palatable beverage extracting filter, wherein a warp is a core-sheath type conjugate monofilament in which a core component is a homopolyester having a melting point of 220°C or more and a sheath component is a copolyester containing terephthalic acid and a diol as major components and having a melting point at least 40°C lower than that of the core component, and a weft is the multifilament according to any one of (1) to (7).

(10) A woven fabric for palatable beverage extracting filter, wherein, a warp and a weft are the multifilament according to any one of (1) to (7).

(11) A woven fabric for palatable beverage extracting filter, wherein, a warp is a core-sheath type conjugate monofilament in which a core component is a homopolyethylene terephthalate and a sheath component is a copolyethylene terephthalate in which more than 20 mol% of an isophthalic acid is copolymerized, and a weft is the multifilament according to any one of (1) to (7).

(12) A manufacturing method of a core-sheath type conjugate multifilament for a palatable beverage extracting woven fabric filter, wherein spinning a undrawn yawn by injecting a core component of a homopolyethylene terephthalate as a homopolyester and a sheath component of a copolyethylene in which more than 20 mol% of an isophthalic acid is copolymerized as a copolyester from a spinneret, at a spinning temperature of 290°C to 300°C, drawing the undrawn yarn to 3 to 4 times with the spinning speed directly after spinning without being reeled, and winding a multifilament in which a number of filaments is 2 to 5 with a spinning speed of 3,200 to 4,000 m/min. Further, the multifilament obtained in (1) to (7) is preferably be manufactured by the spin draw method.

EFFECT OF THE INVENTION

The present invention is to provide a filament for woven fabric where palatable beverage extracting filter which have excellent filter formability, which is less expensive, and which have excellent extractability can be obtained when manufacturing the palatable beverage extracting filter. Further, by using the multifilament, the size of the aperture can be easily controlled with a little use of yarn, when manufacturing the palatable beverage extracting filter. Moreover, the palatable beverage extracting filter which has excellent tenseness and has excellent transparency, and has high quality can be obtained.

MODE FOR CARRYING OUT THE INVENTION

The present invention is a core-sheath type conjugate multifilament for a palatable beverage extracting filter.

The core component of the core-sheath type conjugate multifilament for the palatable beverage extracting filter of the present invention is a homopolyester having a melting point of 220°C or more which does not copolymerized with the third component. In the present invention "homopolyester" means "polyester where two components of terephthalic acid and alkylene glycol are polymerized", and "copolyester" means polyester which contains three or more component and which includes the component other than the component mentioned above (for example isophthalic acid). Suitable examples of the homopolyester include polyesters containing, as a major component, a polyalkylene terephthalate such as polyethylene terephthalate (PET), polybutylene terephthalate (PBT) and polytrimethylene terephthalate (PTT). If the melting point of the core component is less than 220°C, the woven fabric obtained by weaving the core-sheath type conjugate multifilament tends to decrease the strength retention after dry heating. In terms of maintaining the strength retention of the woven fabric for filter, the core component is preferably polyethylene terephthalate. The melting point of the polyethylene terephthalate is preferably from 255 to 265°C.

The intrinsic viscosity of the PET of the core component is preferably within a range of 0.4 or more and 0.8 or less. More preferably, it is within a range of 0.5 or more and 0.7 or less, and in particular, within a range of 0.55 or more and 0.65 or less. If the intrinsic viscosity is too low, the strength after knitting or weaving tends to be insufficient. If the intrinsic viscosity is too high, the intrinsic viscosity of the raw material polymer needs to be increased excessively, and the cost tends to be increased. Therefore, the above ranges are preferred.

The polymerization catalyst for the homopolyester of the core component is preferably a titanium catalyst in terms of the environmental safety.

Suitable examples of the titanium catalyst used as the polymerization catalyst include titanium acetate, titanium tetraalkoxide, titanium halides, titanate salts, and titanium alkoxides.

As these catalysts, a composite with a compound containing magnesium can be suitably used in order to improve the activity of the catalyst. Particularly preferred example includes a magnesium compound on which a coating layer of titanic acid is formed. In the present invention, the magnesium compound on which a coating layer of titanic acid is formed is a compound obtained by hydrolyzing a titanium compound at a temperature of 5 to 100°C, preferably 15 to 70°C in the presence of a magnesium compound, and precipitating titanic acid on the surface to form a coating layer of titanic acid on the surface of the magnesium compound.

The content of the titanium catalyst is preferably from 10 to 500 ppm, and more preferably from 50 to 200 ppm based on the polyester resin.

The sheath component of the core-sheath type conjugate multifilament of the present invention is a copolyester containing terephthalic acid and a diol as major components in which the melting point is at least 40°C lower than that of the core component. More specifically, suitable example includes a copolyester containing terephthalic acid and a diol such as ethylene glycol as major components. "major component" means "50mol% or more". More specifically, "major component" means copolyester containing 50mol% or more of polyalkylene terephthalate component. Suitable components which copolymerizes with the polyalkylene terephthalate include isophthalic acid, adipic acid, and sebacic acid. Among them, considering the ease of conjugating the core-sheath structure and handling properties while manufacturing the woven fabric filter, isophthalic acid is preferred. Note that in the present invention, in the case of the amorphous component having no peak of melting point, the softening point is considered as the melting point.

Preferred aspect of the sheath component of the core-sheath type conjugate multifilament is copolyethylene terephthalate in which the terephthalic acid and the isophthalic acid are copolymerized. In terms of easy heat bonding and good handling properties, the isophthalic acid is copolymerized more than 20mol% in the molar ratio with the terephthalic acid. As for the molar ratio (terephthalic acid/isophthalic acid), it is preferable to be from 80/20 to 70/30.

The intrinsic viscosity of the copolyethylene terephthalate in which the isophthalic acid is copolymerized of the sheath component, is preferably within a range of 0.60 or more and 0.66 or less. If the intrinsic viscosity is too low, the strength after knitting or weaving tends to be insufficient. If the intrinsic viscosity is too high, the intrinsic viscosity of the raw material polymer needs to be increased excessively, and the cost tends to be increased. Therefore, the above ranges are preferred.

When the above-described copolyethylene terephthalate is used as the sheath component, the melting point will suitably be lower than that of the core component and the heat bonding processing will become easy, and the formability will improve, which is preferred.

The polymerization catalyst for the copolyester of the sheath component is preferably a titanium catalyst in terms of the environmental safety.

Suitable examples of the titanium catalyst used as the polymerization catalyst include titanium acetate, titanium tetraalkoxide, titanium halides, titanate, and titanium alkoxides.

As these catalysts, a composite with a compound containing magnesium can be suitably used in order to improve the activity of the catalyst. Particularly preferred example includes a magnesium compound on which a coating layer of titanic acid is formed. In the present invention, the magnesium compound on which a coating layer of titanic acid is formed is a compound obtained by hydrolyzing a titanium compound at a temperature of 5 to 100°C, preferably 15 to 70°C in the presence of a magnesium compound, and precipitating titanic acid on the surface to form a coating layer of titanic acid on the surface of the magnesium compound.

The content of the titanium catalyst is preferably from 10 to 500 ppm, and more preferably from 50 to 200 ppm based on the polyester resin.

The core-sheath ratio of the core-sheath type conjugate multifilament of the present invention is preferably from 20/80 to 80/20 (by volume). When the ratio is within the range, the core component maintains the strength more suitably, and the heat shrinking percentage of the core-sheath type conjugate multifilament for the palatable beverage extracting filter can be suppressed. Therefore, the slippage of the woven fabric can be easily prevented, and the formability as the filter is good.

The number of the filaments of the core-sheath multifilament of the present invention is preferably from 2 to 5. When the number of the filament is within the range, the multifilament having the above mentioned combination of the core component and the sheath component, can be stably fiberized by direct spinning and drawing method (spin draw method), without taking two step method of spinning and drawing, and also has good weavability. Further, the multifilament can effectively control the size of the aperture of the woven fabric rather than the monofilament, with a little use of yarn. Therefore, less expensive filter having excellent extractability can be obtained easily. That is each filament can be fixed uniformly flat in fiber long direction by fusing the sheath component of the multifilament. Therefore, has excellent formability, the use of the yarn can be reduced, the size of the aperture can be controlled, has excellent extractability, and the excellent in preventing of the slippage. If the number of the filaments is larger than the range, the yarn will not converge equally when forming the filter and it will be difficult to equally secure the size of the aperture, and the quality of the filter may fall. Further, because the aperture is not equal, the performance of the filter also may fall. More, if the number of the filament is within this range, the transparency will improve and the filter will be visually improved.

The core-sheath type multifilament of the present invention is preferable, because, the core component is the polyethylene terephthalate as mentioned above, the sheath component is the isophthalic acid copolyethylene terephthalate as mentioned above, and the number of the filament is as mentioned above, therefore the previously mentioned effect can be effectively obtained.

The core-sheath type multifilament of the present invention preferably has few filaments and is preferably to be manufactured with direct spinning and drawing method (spin draw method) which is to directly drawn after spinning without being reeled like described below. Resultantly, filaments adhere moderately and the cross sectional figure will be flexible, therefore, the flexibility while weaving is suitable, and the handling will be great. Further, manufactured filter can have good tenseness like that of the monofilament. If the number of the filaments is too large, fineness per one filament will become small and the yarn will be too soft for the filter to obtain tenseness. The preferable number of the filament in the filament for palatable beverage extracting woven fabric filter of the present invention is from 2 to 4.

When the number of the filaments is as mentioned above, the fineness of the core-sheath type conjugate multifilament of the present invention is preferably from 15 to 40 dtex, and more preferably from 20 to 35 dtex, considering the formability in producing the woven fabric for a palatable beverage extracting filter, and extraction properties of the filter. The single yarn fineness is preferably from 3 to 20 dtex, and more preferably from 4 to 18 dtex.

In the core-sheath type conjugate multifilament of the present invention, it is preferable that the mass change after immersing in an aqueous ethanol solution in a concentration of 10 mass% for 1 hour is 4% or less.

By achieving such a mass change, the filament has excellent environmental safety and safety as the palatable beverage extracting filter. More preferably, the mass change is 2% or less. Further preferably, the mass change is 1% or less.

The mass change is a value calculated by the following equation.

$$\text{Mass change } (\%) = [(\text{mass before immersing-mass after immersing})/(\text{mass before immersing})] \times 100$$

The eluted amount of heavy metals of the core-sheath type conjugate multifilament of the present invention is less than 0.10 ppm. The eluted amount is defined as the amount of metal elements having a true specific gravity of 5.0 or more by immersing and eluting the multifilament in an ethanol solution in a concentration of 10 mass% at 100°C for 1 hour.

When the eluted amount of heavy metals is less than 0.10 ppm, it can be suitably used for the palatable beverage extracting filter, and the environmental safety is suitable.

The shrinking percentage after heat water treatment of the core-sheath type conjugate multifilament of the present invention is preferably 10% or less, and in particular, 8% or less. By adjusting the shrinking percentage into the range, the woven fabric will not bend during heat setting, and the processability during forming will improves. The hot water shrinking percentage is preferably 3% or more in terms of the good adhesion, no slippage, and easy handling. The shrinking percentage after heat water treatment of the core-sheath type conjugate multifilament is a value measured by the following method.

The core-sheath type conjugate multifilament of the present invention can produce a suitable woven fabric used for the palatable beverage extracting filter by weaving.

The weave of the woven fabric is suitably a plain woven fabric, for example.

In the present invention, as the woven fabric for the palatable beverage extracting filter, the core-sheath type conjugate multifilament of the present invention may be woven in a ratio of 100%, or may be used for the part of the woven fabric. Preferably, 40% or more is used. The core-sheath type conjugate multifilament of the present invention may be used in the warp as well as the weft and in either warp or weft.

As for a preferable woven fabric which the core-sheath type conjugate multifilament of the present invention is partially used, a regular polyester fiber such as homoPET or the core-sheath type monofilament where the melting point of the sheath component is lower than the melting point of the core component is used as the warp and the core-sheath type conjugate multifilament of the present invention is used as the weft. In this case, the thermal adhesiveness of the intersection in woven fabrics is suitable and the formability and the extractability are excellent, which is suitable.

When the core-sheath type monofilament is used as the warp, it is preferable to use the core-sheath type conjugate monofilament in which the sheath component have the melting point of 40°C or more, lower than that of the core component. Especially, it is preferable to use the core-sheath type conjugate monofilament in which the core component is homopolyester having the melting point of 220 °C or more, and the sheath component is a copolyester containing terephthalic acid and a diol as major components and having a melting point at least 40°C lower than that of the core component. More specifically, it is preferable to use the core-sheath type monofilament where polyethylene terephthalate is used as the homopolyester of the core component and copolyethylene terephthalate in which more than 20 mol% of an isophthalic acid is copolymerized is used as the copolyester of the sheath component. Furthermore, the monofilament which comprises at least one of the suitable states (for example, composition, fineness, shrinking percentage after heat water treatment) of the core-sheath type conjugate multifilament of the present invention other than the number of the filament, is preferable. When the core-sheath type conjugate monofilament where the melting point of the sheath component is lower than that of the core component is used as a warp, the monofilament is to preferably has same composition, fineness, and shrinking percentage after heat water treatment as the core-sheath type conjugate multifilament of the present invention. More preferably the core-sheath type conjugate monofilament that has same aspect as the core-sheath type conjugate multifilament of the present invention except that the number of the filament is one is used.

As for the core-sheath type conjugate multifilament of the present invention, considering the excellent extractability, manufacturing cost of the filter, the handling, and the quality as the filter, it is preferable to use PET as the homopolyester of the core component and coPET in which more than 20 mol% of an isophthalic acid is copolymerized as the copolyester of the sheath component. And it is preferable that the number of the filaments is 2 to 5 and obtained from the under mentioned spin draw method (SPD method).

The tearing strength of the woven fabric using the core-sheath type conjugate multifilament of the present invention is preferably 5 N or more, and particularly preferably 7 N or more in terms of the processability at the forming of the beverage extracting filter.

The aperture ratio of the woven fabric using the core-sheath type conjugate multifilament of the present invention is preferably from 40% to 70% in terms of easy liquid draining when used as the beverage extracting filter and less slippage of the filter.

The woven fabric being composed of the core-sheath type conjugate multifilament of the present invention can be used as the filter for palatable beverage by heat treating and sealing by an ultrasonic sealing method etc., and forming.

The woven fabric being composed of the core-sheath type conjugate multifilament of the present invention can maintain the fabric strength after sealing, and has good formability. Therefore, various three dimensional shape palatable beverage extracting filter can be easily obtained, including a rectangular plane shape, spherical shape, tetrapak shape, four-armed scoop net shape, and other polyhedron shapes.

The beverage extracting filter obtained by using the woven fabric being composed of the core-sheath type conjugate multifilament of the present invention can be suitably used for various palatable beverages such as tea leaves or powders of black tea, barley tea, oolong tea, jasmine tea, green tea, etc., and particles or powders of coffee, etc. Especially, the filter which is superior in the extractability of tea leaves can be provided.

An example of the suitable method for producing the palatable beverage extracting filter in the present invention is described below.

A core-sheath type conjugate multifilament is produced by using polyethylene terephthalate in which the polymerization catalyst is a titanium catalyst as the core component, and isophthalic acid copolymerized polyester in which the titanium catalyst is the polymerization catalyst as the sheath component. In this case, it is preferably to be produced by spin draw method (SPD method) in which the undrawn filament is directly drawn after spinning without being reeled, and then reeled after the drawing. In this case, suitable spinning conditions are, for example, spinning speed of 3,200 to 4,200 m/min, spinning temperature of 290 to 300°C, and draw ratio of 3 to 4 times.

Next, after the obtained core-sheath type conjugate multifilament is woven, the sheath component is heat treated so that the slippage at the intersection of the woven fabric does not occur to obtain a woven fabric for filter. Next, a palatable beverage extracting filter can be obtained by sealing the obtained woven fabric for filter by an ultrasonic sealing method etc., forming into a suitable shape such as a tetrapak shape.

EXAMPLES

Measurements and evaluations of physical properties were performed as follows.

1) Intrinsic viscosity

0.5 g of a polymer was dissolved to a 50 ml of phenol/tetrachloroethane = 6/4 (by weight) mixed solution, and measured using Ostwald viscometer at 20°C.

2) Melting point

Melting point was measured using the model DSC-7 manufactured by PerkinElmer Inc., in a condition of 10 mg of chip and an increasing temperature of 10°C/min.

3) Strength, elongation

According to JIS L 1013, using AGS 1KNG autograph tensile tester manufactured by Shimadzu Corporation, the strength (cN/dtex) and the elongation (%) when the sample was stretched and broken was measured in a condition that the yarn length of the sample is 200 mm, and the tensile speed is 200 mm/min.

4) Eluted amount of heavy metals

The yarn sample was immersed in an aqueous ethanol solution in a concentration of 10 mass% at 100°C for 1 hour and eluted. The eluted ethanol solution was measured using an ICP mass spectrometer manufactured by Agilent Technologies Japan, Ltd. (Agilent 7500cs) and an ICP optical spectrometer manufactured by AMETEK, Inc. (CIROS CCD).

5) Mass change

The mass of the yarn sample was measured, and the value was considered as the mass before immersing. Next, the yarn sample was immersed in an aqueous ethanol solution in a concentration of 10 mass% at 100°C for 1 hour, and dried. The dried yarn sample was measured, and the value was considered as the mass after immersing. The mass change was calculated by the following equation.

$$\text{Mass change (\%)} = [(\text{mass before immersing} - \text{mass after immersing})/(\text{mass before immersing})] \times 100$$

6) Shrinking percentage

The yarn having a sample length of 500 mm and hanging a load of 2 mg/dtex was immersed in boiling water for 15 min. Next, after air drying, the shrinking percentage of the core-sheath type conjugate multifilament was calculated by the following equation.

$$\text{Shrinking percentage (\%)} = [(\text{initial sample length} - \text{sample length after shrinkage})/\text{initial sample length}] \times 100$$

7) Tearing strength

In proportion to JIS L1096 8.15.1 A-1 method (single tangue method), using a Tensilon RTA-500 tensile tester manufactured by ORIENTEC CORPORATION in a condition that the sample width is 50 mm, the sample length is 250 mm, the distance between chucks is 100 mm, and the tensile speed is 100 mm/min, the maximum load when the sample was teared was measured.

8) Extraction properties

3 g of green tea leaves was charged to the produced palatable beverage extracting filter, immersed in water at 90°C for 1 min, and then the color change of water was determined visually.

(Example 1)

A polyethylene terephthalate used for the core component (intrinsic viscosity: 0.629) was obtained by using terephthalic acid and ethylene glycol as raw materials, adding 180 ppm of a magnesium compound on which a coating layer being composed of titanic acid is formed as the polymerization catalyst for PET oligomer, and polycondensating. Next, a 25 mol isophthalic acid copolymerized polyethylene terephthalate used for the sheath component (intrinsic viscosity: 0.643) was obtained by using an acid component containing terephthalic acid and 25 mol% of added isophthalic acid and ethylene glycol as raw materials, adding 180 ppm of a magnesium compound on which a coating layer being composed of titanic acid is formed as the polymerization catalyst to the polyester, and polycondensating.

The obtained two polyester resins were fed to a melt spinning apparatus. The polymers were injected in a ratio of core to sheath by volume of 50 : 50, and melt spun using a spinneret having 3 holes which the size is 0.45 mm at a spinning temperature of 295°C. The undrawn yarn is then winded 7 times to the first godet roller with a temperature of 95°C. The peripheral speed of the first godet roller was 950m/min. And then, the yarn is winded 7 times to the second godet roller with a temperature of 150°C and having 4 times the peripheral speed of the first godet roller. Resultantly, the yarn was drawn to 4 time. Continuously, the multifilament having 3 filaments of drawn yarn (multifilament) was winded and reeled at a spinning speed of 3,800 m/min (melting point of the core component :255°C, melting point of the sheath component :185°C)

The obtained multifilaments were woven as plain weave in a condition that the warp density was 120/2.54 cm and the weft density was 120/2.54 cm to obtain a woven fabric. The obtained woven fabric was scoured, heat treated at 200°C, and then fused the sheath component at the intersection of yarns to obtain a woven fabric for filter. The obtained woven fabric for filter was formed into a tetrapak by an ultrasonic sealing method to produce a palatable beverage extracting filter.

(Example 2)

A polyester multifilament yarn was obtained by melt spinning as similar in Example 1 except that the ratio of core to sheath by volume was changed to 70:30. And a palatable beverage extracting filter was produced as similar in Example 1.

(Example 3)

A polyethylene terephthalate (intrinsic viscosity: 0.63) used for the core component was obtained by using terephthalic acid and ethylene glycol as raw materials, adding 200 ppm of a magnesium compound on which a coating layer being composed of titanic acid is formed as the polymerization catalyst for PET oligomer to a PET oligomer, and polycondensating.

Further, isophthalic acid copolymerized polyethylene terephthalate used for the sheath component was obtained in the method described in Example 1.

The two polyester resins were melted spun and drawn in the method described in Example 1 to obtain a polyester multifilament yarn (The melting point of the core component was 255°C, and the melting point of the sheath component was 185°C.). The obtained polyester multifilament was used to produce a palatable beverage extracting filter as similar in Example 1.

(Example 4)

Except that 400 ppm of antimony trioxide was used as the polymerization catalyst for polyethylene terephthalate of the core component and the sheath component, the palatable beverage extracting filter was produced by polycondensating, spinning, drawing as similar in Example 1.

The polymerization catalyst, the core-sheath ratio of the multifilament, the number of the filament in the multifilament, the eluted amount of heavy metals, the mass change, the fineness, the strength, the elongation, the shrinking percentage, the tearing strength of the woven fabric for filter, and extractability of the Example 1 to 4 are shown in Table 1.

[Table 1]

|  | Example 1 | Example 2 | Example 3 | Example 4 |
|---|---|---|---|---|
| polymerization catalyst | Ti | Ti | Ti | Sb |
| Core-sheath ratio | 50:50 | 70:30 | 50:50 | 70:30 |
| Number of filaments | 3 | 3 | 3 | 3 |

(continued)

| | Example 1 | Example 2 | Example 3 | Example 4 |
|---|---|---|---|---|
| Eluted amount of heavy metals (ppm) | 0.02 | 0.02 | 0.02 | 1.25 |
| Mass change (%) | 0.9 | 0.9 | 0.9 | 0.9 |
| Fineness (dtex) | 28.0 | 28.0 | 28.0 | 28.0 |
| Strength (cN/dtex) | 3.94 | 4.26 | 3.78 | 3.80 |
| Elongation (%) | 47.7 | 51.1 | 54.0 | 51.0 |
| Shrinking percentage (%) | 7.5 | 6.6 | 7.0 | 7.0 |
| Tearing strength (N)<br>Warp direction<br>Weft direction | 8.7<br>7.0 | 9.3<br>7.4 | 8.6<br>6.8 | 8.7<br>6.9 |
| Extractability | Excellent | Excellent | Excellent | Excellent |

(Comparative Example 1)

Except that copolyethylene terephthalate was used as the sheath component, the palatable beverage extracting filter was produced by polycondensating, spinning, drawing as similar in Example 1. The tearing strength of the woven fabric for filter was 5N or less, which was low.

(Example 5)

The core-sheath type conjugate multifilament obtained in Example 1 were woven as plain weave in a condition that the warp density was 140/2.54 cm and the weft density was 140/2.54 cm to obtain a woven fabric. The obtained woven fabric was scoured, heat treated at 200°C, and then fused the sheath component at the intersection of yarns to obtain a woven fabric for filter. The tearing strength of the woven fabric was 5 N or more in both direction of warp and weft. The eluted amount of heavy metals was 0.02 ppm. The mass change was 0.9%. The obtained woven fabric for filter was formed into a tetrapak by an ultrasonic sealing method to produce a palatable beverage extracting filter.

(Example 6)

The obtained two polyester resins of Example 1 were fed to a melt spinning apparatus. The polymers were injected in a ratio of core to sheath by volume of 1:1, and melt spun using a spinneret having hole size of 0.45 mm at a spinning temperature of 290°C and a spinning speed of 1,500 m/min to obtain an undrawn polyester monofilament yarn. Then, the undrawn yarn was drawn to 3.4 times at a heat roller temperature of 90°C, and heat treated under relaxation at a hea plate temperature of 160°C to obtain a polyester monofilament. (The melting point of the core component was 255°C, and the melting point of the sheath component was 185°C.)
The obtained polyester monofilament as a warp and the obtained multifilament of Example 1 as a weft, were woven as plain weave to obtain woven fabric. The condition of the warp density was 120/2.54 cm and the weft density was 120/2.54 cm. The tearing strength of the woven fabric was 5 N or more in both direction of warp and weft. The eluted amount of heavy metals was 0.02 ppm. The mass change was 0.9%. The obtained woven fabric was scoured, heat treated at 200°C, and then fused the sheath component at the intersection of yarns to obtain a woven fabric for filter. The obtained woven fabric for filter was formed into a tetrapak by an ultrasonic sealing method to produce a palatable beverage extracting filter.

(Comparative Example 2)

Polyester monofilament as similar in Example 6 was obtained by using two polyester resins using the polymerization catalyst of Example 4. Obtained polyester monofilaments were used as warp and weft and the palatable beverage extracting filter was produced as similar in Example 1.
The extractability of Example 1, 5, and 6, and Comparative Example 2 were shown in Table 2.

[Table 2]

|  | Warp (dtex/f) | Warp density (number/cm) | Weft (dtex/f) | Weft density (number/cm) | Extractability |
|---|---|---|---|---|---|
| Example 1 | 28/3 | 120 | 28/3 | 120 | Excellent |
| Example 5 | 28/3 | 140 | 28/3 | 140 | Good |
| Example 6 | 28/1 | 120 | 28/3 | 120 | Good |
| Comparative Example 2 | 28/1 | 210 | 28/1 | 210 | Insufficient |

The woven fabric for filter being composed of the multifilament obtained by Examples 1 to 3 improved the problems of the polyamide, had excellent formability and sufficient fabric strength, could be used as the beverage extracting bag sufficiently. Further, the woven fabric for beverage extracting filter had excellent environmental safety. While Example 4 using antimony trioxide catalyst had more eluted amount of heavy metals than the Example 1 to 3. Therefore, the environmental safety of Example 4 was inferior to Example 1 to 3.

The woven fabric for filter obtained in Example 5 and 6 were both excellent in formability. The tearing strength of the both woven fabrics was 5N or more. The eluted amount of heavy metals was 0.02 ppm. The mass change was 0.9%. Therefore, both woven fabrics had sufficient fabric strength and environmental safety.

The fabric strength of the woven fabric for filter obtained in Comparative Example 1 was insufficient. The formability of comparative Example 1 was inferior to Examples. The comparative Example 1 was not sufficient for the palatable beverage extracting filter.

Assessing the palatable beverage extracting filter using Examples and Comparative Examples, the filter using Examples had superior extractability. The extractability of the filter using Comparative Example 2 was inferior to that of filter using Example 1, 5, and 6.

Comparing the multifilament of Example 1 to 6 and the filament of Comparative Example 2, the controlling of the size of the aperture, slippage, the formability and the extractability of the woven fabric for filter using the multifilament of Examples were superior than that of woven fabric for filter using the filament of Comparative Example 2 despite that the woven fabric for filter using the multifilament of Examples used little yarn than the woven fabric for filter using the filament of Comparative Example 2. Therefore, the woven fabric for filter using the multifilament of Exampes had superiority in extractability and cost.

(Example 7 to 9, Comparative Example 4)

Except that the number of the filaments are set to be 2, 4, 5, 6, the palatable beverage extracting filter was produced as similar in Example 1. The tenseness of the woven fabric, the transparency of the woven fabric, tearing strength of the woven fabric was assessed as shown below.

A) Tenseness of woven fabric

The examiner sensuality evaluated the tenseness of the woven fabric for filter in three phases.

(○) good tenseness

(△) normal

(×) no tenseness

B) Transparency of woven fabric

Transparency of the woven fabric for filter was evaluated in three phases.

(○) good transparency

(△) normal

(×) bad transparency.

C) Tearing strength

The tearing strength of woven fabric for filter was evaluated in two phases.

(○) The tearing strength of the woven fabric was 5 N or more in both warp and weft direction.

(×) The tearing strength of the woven fabric of at least warp direction or weft direction was less than 5 N.

The result of Example 7 to 9 and Comparative Example 4 are shown in Table 3.

[Table 3]

|  |  | Ex. 7 | Ex. 1 | Ex. 8 | Ex. 9 | Co. Ex. 4 |
|---|---|---|---|---|---|---|
| Number of Filaments | | 2 | 3 | 4 | 5 | 6 |
| Assessment | Tenseness | ○ | ○ | ○ | ○ | × |
|  | Transparency | ○ | ○ | ○ | Δ | × |
|  | Tearing strength | ○ | ○ | ○ | ○ | × |

Example 1, 7 to 9 had the tearing strength of 5N or more in both warp and weft directions, had excellent flexibility while weaving, had excellent handling property while heat treating. It had suitable tenseness for filter. The multifilament of Example 7, Example 1, and Example 8 were excellent in transparency as woven fabric. On the other hand, the filament of Comparative Example 4 was insufficient in tearing strength, and had no tenseness and inferior in transparency when formed as filter.

**Claims**

1.    A core-sheath type conjugate multifilament for a palatable beverage extracting woven fabric filter, wherein
a core component is a homopolyester having a melting point of 220°C or more,
a sheath component is a copolyester containing terephthalic acid and a diol as major components and having a melting point at least 40°C lower than that of the core component, and
a number of filaments is 2 to 5.

2.    A core-sheath type conjugate multifilament for a palatable beverage extracting woven fabric filter, wherein
a core component is a homopolyethylene terephthalate,
a sheath component is an isophthalic acid copolymerized polyethylene terephthalate, and
a number of filaments is 2 to 5.

3.    A core-sheath type conjugate multifilament for a palatable beverage extracting woven fabric filter, wherein
a core component is a homopolyethylene terephthalate,
a sheath component is a copolyethylene terephthalate in which more than 20 mol% of an isophthalic acid is copolymerized, and
a number of filaments is 2 to 5.

4.    The multifilament for a palatable beverage extracting woven fabric filter according to any one of claims 1 to 3, wherein a mass change after immersing in an aqueous ethanol solution in a concentration of 10 mass% for 1 hour is 4% or less.

5.    The multifilament for a palatable beverage extracting woven fabric filter according to any one of claims 1 to 4, wherein an eluted amount of heavy metals is less than 0.1 ppm.

6.    The multifilament for a palatable beverage extracting woven fabric filter according to any one of claims 1 to 5, wherein a polycondensation catalyst for the copolyester in the sheath component is a titanium catalyst.

7.    The multifilament for a palatable beverage extracting woven fabric filter according to any one of claims 1 to 6, wherein a polycondensation catalyst for the homopolyester in the core component is a titanium catalyst.

8. A woven fabric for a palatable beverage extracting filter, wherein the woven fabric comprises the multifilament according to any one of claims 1 to 7.

9. A woven fabric for palatable beverage extracting filter, wherein
a warp is a core-sheath type conjugate monofilament in which a core component is a homopolyester having a melting point of 220°C or more and a sheath component is a copolyester containing terephthalic acid and a diol as major components and having a melting point at least 40°C lower than that of the core component, and
a weft is the multifilemant according to any one of claims 1 to 7.

10. A woven fabric for palatable beverage extracting filter, wherein, a warp and a weft are the multifilament according to any one of claims 1 to 7.

11. A woven fabric for palatable beverage extracting filter, wherein,
a warp is a core-sheath type conjugate monofilament in which a core component is a homopolyethylene terephthalate and a sheath component is a copolyethylene terephthalate in which more than 20 mol% of an isophthalic acid is copolymerized, and
a weft is the multifilament according to any one of claims 1 to 7.

12. A manufacturing method of a core-sheath type conjugate multifilament for a palatable beverage extracting woven fabric filter, wherein
spinning a undrawn yawn by injecting a core component of a homopolyethylene terephthalate as a homopolyester and a sheath component of a copolyethylene in which more than 20 mol% of an isophthalic acid is copolymerized as a copolyester from a spinneret, at a spinning temperature of 290°C to 300°C,
drawing the undrawn yarn to 3 to 4 times with the spinning speed directly after spinning without being reeled, and
winding a multifilament in which a number of filaments is 2 to 5 with a spinning speed of 3,200 to 4,000 m/min.

<table>
<tr><td colspan="2" align="center">**INTERNATIONAL SEARCH REPORT**</td><td>International application No.<br>PCT/JP2020/000359</td></tr>
</table>

| | |
|---|---|
| **A. CLASSIFICATION OF SUBJECT MATTER**<br>D01F 8/14(2006.01)i; A47J 31/06(2006.01)i; B01D 39/08(2006.01)i; B65D 77/00(2006.01)i; D03D 1/00(2006.01)i<br>FI: D01FS/14 B; D03D1/00Z; A47J31/06; B01D39/08 Z; B65D77/00 F<br>According to International Patent Classification (IPC) or to both national classification and IPC | |

**B. FIELDS SEARCHED**

Minimum documentation searched (classification system followed by classification symbols)
D01FS/00-8/18; D03D1/00-27/18; A47J31/00-31/60; B01D39/00-41/04; B65D77/00-77/40

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2008-163485 A (TEIJIN FIBERS LTD.) 17.07.2008 (2008-07- 17) claims 1-3, paragraphs [0004], [0012], examples | 1, 2, 4-7<br>3, 8-12 |
| X<br>A | JP 2009-005911 A (TEIJIN FIBERS LTD.) 15.01.2009 (2009-01-15) claim 2, paragraph [0001], examples | 1, 4-7<br>2, 3, 8-12 |
| X<br>Y<br>A | JP 2017-119932 A (KB SEIREN, LTD.) 06.07.2017 (2017-07-06) claims 1-3, 5, paragraphs [0009], [0010], [0014], [0015] | 1-8, 10<br>9, 11<br>12 |
| Y | JP 3139823 U (YAMANAKA & CO., LTD.) 06.03.2008 (2008-03-06) claim 1, paragraph [0008] | 9, 11 |
| P, X | JP 2019-014505 A (KB SEIREN, LTD.) 31.01.2019 (2019-01-31) claims 1-8, paragraph [0034], examples | 1-12 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>16 March 2020 (16.03.2020) | Date of mailing of the international search report<br>24 March 2020 (24.03.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2020/000359 |

C (Continuation).    DOCUMENTS CONSIDERED TO BE RELEVANT

| Category* | Citation of document, with indication, where appropriate, of the relevant passages | Relevant to claim No. |
| --- | --- | --- |
| P, X | WO 2019/009386 A1 (KB SEIREN, LTD.) 10.01.2019 (2019-01-10) claims 1-7, paragraph [0038], examples | 1-12 |

Form PCT/ISA/210 (continuation of second sheet) (January 2015)

INTERNATIONAL SEARCH REPORT

Information on patent family members

International application No.

PCT/JP2020/000359

| Patent Documents referred in the Report | Publication Date | Patent Family | Publication Date |
|---|---|---|---|
| JP 2008-163485 A | 17 Jul. 2008 | (Family: none) | |
| JP 2009-005911 A | 15 Jan. 2009 | (Family: none) | |
| JP 2017-119932 A | 06 Jul. 2017 | (Family: none) | |
| JP 3139823 U | 06 Mar. 2008 | (Family: none) | |
| JP 2019-014505 A | 31 Jan. 2019 | (Family: none) | |
| WO 2019/00386 A1 | 10 Jan. 2019 | CN 11046668 A | |

Form PCT/ISA/210 (patent family annex) (January 2015)

**EP 3 845 689 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3459951 B
- JP 2008045244 A
- WO 2008035443 A